# EUROPÄISCHE PATENTSCHRIFT

(11) **EP 0 447 504 B1**
(45) Veröffentlichungstag und Bekanntmachung des Hinweises auf die Patenterteilung: **28.12.1994**
(21) Anmeldenummer: 90913164.1
(22) Anmeldetag: 12.09.1990
(51) Int. Cl.: B62D 5/04

(54) **ELEKTROMOTORISCHE SERVOLENKUNG**
ELECTRIC MOTOR SERVO-STEERING SYSTEM
DIRECTION ASSISTEE COMMANDEE PAR MOTEUR ELECTRIQUE

(30) Priorität: 10.10.1989 DE 3933771
(43) Veröffentlichungstag der Anmeldung: 25.09.1991
(73) Patentinhaber: ROBERT BOSCH GMBH, 70442 Stuttgart (DE)
(72) Erfinder: SCHLAGMUELLER, Walter, D-7141 Schwieberdingen (DE); REMBOLD, Helmut, D-7000 Stuttgart 40 (DE); LINDER, Ernst, D-7130 Muehlacker (DE)
(86) Internationale Anmeldenummer: DE9000698
(87) Internationale Veröffentlichungsnummer: WO9105692

(56) Entgegenhaltungen:
- EP-A- 051 515
- EP-A- 174 202
- DE-A- 2 817 190
- DE-A- 3 612 619
- FR-A- 1 583 658
- FR-A- 2 223 981
- FR-A- 2 442 476

## Beschreibung

### Stand der Technik

Die Erfindung geht aus von einer elektromotorischen Servolenkung nach dem Oberbegriff des Anspruchs 1. Servolenkungen für Kraftfahrzeuge sind in vielfältiger Form bekannt; üblicherweise wird die elektromotorisch oder auch mit Hilfe eines Druckmittels erzeugte Hilfskraft entsprechend dem Verdrehwinkel eines Torsionsstabs in der Lenksäule zugemessen, wobei auch eine geschwindigkeitsabhängige Servowirkung möglich ist.

Elektromotorische Servolenkungen lassen sich beispielsweise mit Vorteil als Lenkhilfen für Kraftfahrzeuge u. dgl. speziell im Parkiergeschwindigkeitsbereich, also als Park-Servo einsetzen und werden bei höheren Geschwindigkeiten üblicherweise nicht benötigt. Daher eignen sich solche elektromotorischen Servolenkungen insbesondere für kleinere Kraftfahrzeuge und Personenkraftwagen. Bei einer bekannten elektromotorischen Lenkhilfe (SAE-Paper 851 639) erfaßt ein Torsionssensor die relative Verdrehung der Lenksäule vor dem Lenkgetriebe und steuert dementsprechend einen Elektromotor mit unterschiedlicher Drehrichtung an, der dann seinerseits über ein geeignetes Untersetzungsgetriebe die durch den Fahrer auf die Lenksäule vorgenommene Momenteneinleitung unterstützt. Eine solche elektromotorische Lenkhilfe ist auch deshalb vorteilhaft, weil durch entsprechende Ansteuerung des Servoelektromotors bestimmte Eigenschaften der Lenkhilfe problemlos realisiert werden können, also beispielsweise eine Vergrößerung der vom Servomotor gelieferten Hilfskraft bei geringer werdender Fahrzeuggeschwindigkeit, wobei auch andere Regelalgorithmen zugrunde gelegt werden können. Ferner ergeben sich Vorteile hinsichtlich der für die Servolenkung aufzuwendenden Energie sowie im Bereich der Handhabbarkeit des Fahrzeugs. Wird eine solche elektromotorische Lenkhilfe lediglich als Parkservo eingesetzt, dann ist es allerdings notwendig, Trennmittel, beispielsweise eine Trennkupplung vorzusehen, die das vom Servomotor beaufschlagte Getriebe von der Lenksäule abkuppelt, damit bei nichtangesteuertem Servomotor Lenkradbewegungen überhaupt möglich sind bzw. nicht zu stark gebremst werden.

Wird beispielsweise die vom Fahrer auf die Lenksäule ausgeübte Momenteneinleitung mittels eines Torsionsstabs in der Lenksäule gemessen, dann muß, wenn die jeweils zugeordnete elektromotorische Servolenkung lediglich als Parkierhilfe dient, also nur unterhalb einer Grenzgeschwindigkeit von beispielsweise 5 km/h aktiviert ist, der Torsionsstab bei höheren Geschwindigkeiten (normaler Fahrbetrieb) blockiert sein bzw. seine Torsionswirkung muß weitgehend unterbunden werden, da andernfalls die Lenkung im Normalbetrieb an Exaktheit verliert, in gewissem Sinne also zu weich wäre. Eine solche Blockierung des Torsionsstabs kann beispielsweise durch Zusatzkupplung, Sperrklinken oder dgl. realisiert werden, was umständlich und aufwendig ist.

Bei einer aus DE-A-3 612 619 bekannten elektromotorischen Servolenkung der eingangs genannten Art stehen die Lenkradseite und die Lenkgetriebeseite der Lenksäule mit relativ viel Spiel miteinander in formschlüssigem Eingriff. Auf jedem Lenksäulenteil der zweiteiligen Lenksäule ist ein hülsenförmiges Hohlzahnrad in zur Lenksäule gleichachsiger Anordnung drehbar gelagert. Ihre Lager befinden sich mit relativ großem axialem Abstand zur Verzahnung. Die Hohlzahnräder sind von einem Elektromotor kontinuierlich gegenläufig antreibbar. Innerhalb jeden Hohlzahnrades sind in der Ebene der Verzahnung paarweise Kupplungsbacken auf relativ langen Zapfen gelagert, die vom lenkgetriebeseitigen Lenksäulenteil ausgehen und sich parallelachsig beiderseits des lenkradseitigen Lenksäulenteils erstrecken. Dieser Lenksäulenteil besitzt nockenförmige Mitnehmer, mit denen bei einer Relativverdrehung beider Lenksäulenteile mittels des Lenkrades drehrichtungsabhängig eines der beiden Kupplungsbackenpaare in Reibschluß mit dem entsprechenden Hohlzahnrad bringbar ist. Die Servohilfskraft des Elektromotors ist somit auf die Lenksäule und das Lenkgetriebe übertragbar.

Die bekannte elektromotorische Servolenkung ist axial relativ lang bauend, und die Lagerung der Hohlzahnräder am jeweiligen Lenksäulenteil erfordert hohen Aufwand, da sie mit Abstand außerhalb des Axialbereiches liegt, in dem der Elektromotor und die Kupplungsbacken angreifen.

### Vorteile der Erfindung

Die erfindungsgemäße elektromotorische Servolenkung mit den kennzeichnenden Merkmalen des Hauptanspruchs hat demgegenüber den Vorteil, daß beide Hohlzahnräder auf einem Lagerflansch gelagert sind, der auch die Kupplungsbacken trägt, so daß der bauliche Aufwand im Vergleich zum Stand der Technik geringer ist. Der Axialbereich des Lagerflansches, in dem sich die entsprechende Kupplungsbacke befindet, kann daher, abgesehen von der Durchbrechung, die Lagerung des zugeordneten Hohlzahnrades übernehmen, was somit axial relativ kurz bauend ausgebildet sein kann. Darüber hinaus kann in vorteilhafter Weise aufgrund der Verwendung lediglich einer Kupplungsbacke je Hohlzahnrad der vom Kupplungsschuh abgewandte, der Lagerung dienende Teil des Flansches zur Übertragung der Servohilfskraft vom Hohlzahnrad auf die Abtriebsseite der Lenksäule beitragen.

Durch die in den Unteransprüchen aufgeführten Maßnahmen sind vorteilhafte Weiterbildungen und Verbesserungen der im Hauptanspruch angegebenen elektromotorischen Servolenkung möglich. Besonders vorteilhaft ist die Möglichkeit der Blockierung des Torsionsstabs ohne zusätzliche Schaltelemente bei einem ersten Ausführungsbeispiel, bei welchem vom Lenkrad zum Lenkgetriebe durch die ununterbrochene Lenksäule ein direkter Durchgriff besteht.

Alternativ ist es in einer vereinfachten Ausgestaltung auch möglich, im Bereich der Einleitung der Servohilfskraft keine durchgehende Welle in Form der Lenksäule anzuordnen, sondern die vom Lenkgetriebe und die vom Lenkrad kommenden Wellen lose ineinander zu lagern, wobei die Mitnahme der zum Lenkgetriebe führenden Welle bei Momenteneinleitung durch den Fahrer praktisch spielfrei, jedoch unter Verzicht auf einen Torsionsstab erfolgt. Es gelingt so, störendes Spiel in der Lenkung automatisch zu kompensieren, wobei auch einem möglichen Verschleiß an den Kupplungsbacken durch selbsttätige Nachstellung Rechnung getragen wird.

### Zeichnung

Mehrere Ausführungsbeispiele der Erfindung sind in der Zeichnung dargestellt und werden in der nachfolgenden Beschreibung näher erläutert. Es zeigen:
- Fig. 1: einen Schnitt längs der Linie I-I der Fig. 2 durch eine bevorzugte Ausführungsform eines elektromotorischen Lenkhilfeaggregats, speziell für den Parkierbetrieb, mit Teildarstellung der Lenksäule sowie einem dem nichtdargestellten Elektromotor zugeordneten Untersetzungsgetriebe;
- Fig. 2: zeigt eine teilweise geschnittene Seitenansicht des elektromotorischen Lenkhilfeaggregats und
- Fig. 3: eine Detaildarstellung als Schnitt längs der Linie III-III der Fig. 2; die
- Figuren 4 und 5: zeigen eine weitere bevorzugte Ausführungsform vorliegender Erfindung, ebenfalls im Quer- und Längsschnitt, während
- Fig. 6: schematisiert eine Draufsicht auf einen Teilausschnitt zur formschlüssigen Mitnahme zeigt.

### Beschreibung der Ausführungsbeispiele

Der Grundgedanke vorliegender Erfindung besteht darin, durch einen auf der Seite der Momenteneinleitung durch den Fahrer an der Lenksäule angeordneten Mitnehmer jeweils je nach Drehrichtung unterschiedliche Kupplungsbacken zu betätigen, die an dem sozusagen als Abtriebswelle anzusehenden Teil der Lenksäule drehfest sitzen und die zum Lenkgetriebe weiterführenden Lenksäule durch Reibungseingriff mitnehmen, wobei zum Zeitpunkt der Momenteneinleitung durch den Fahrer an der Lenksäule durch gegenläufig drehende Räder eines Räderpaares, die gemeinsam von einem Servoelektromotor angetrieben sind, beide Drehrichtungen für die Lenksäule zur Verfügung stehen und durch den Mitnehmer bestimmt wird, welche Drehrichtung bei der Hilfskrafteinleitung gewählt wird. Der Mitnehmer kann dabei am Ende eines Torsionsstabs angeordnet sein oder fester Teil einer vom Lenkrad kommenden Lenkteilsäule sein. Er dient dem selektiven Anpressen der Kupplungsbacken je nach der vom Fahrer erfolgten Momenteneinleitung.

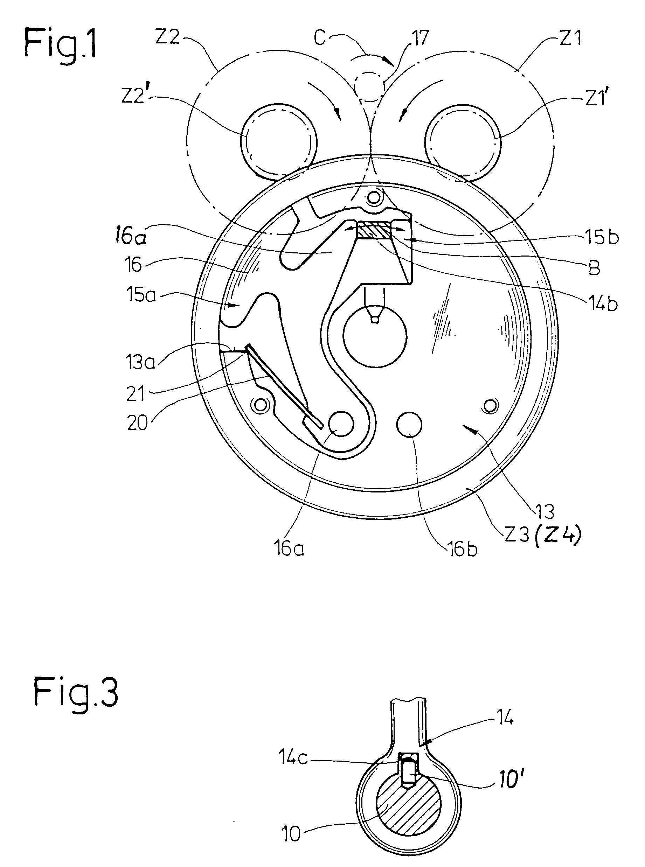

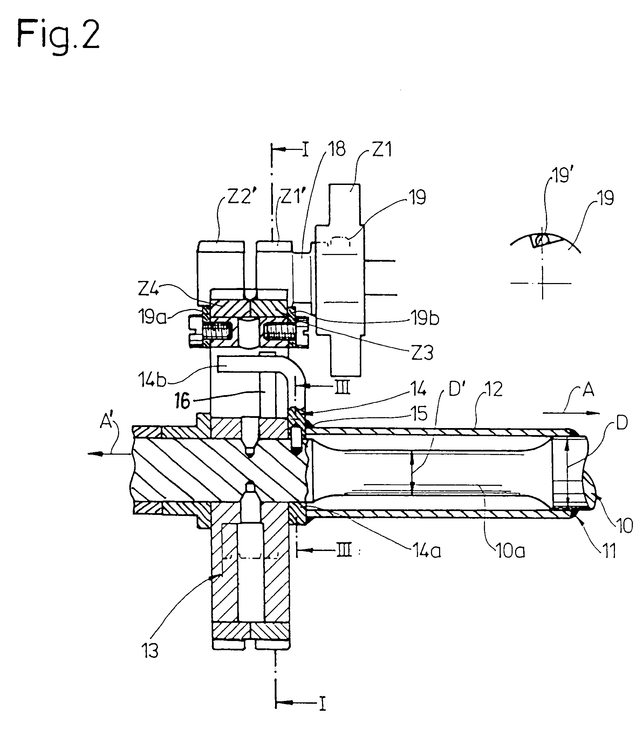

Bei dem in den Figuren 1 und 2 dargestellten Ausführungsbeispiel ist die hier einen direkten Durchgriff realisierende Lenksäule mit 10 bezeichnet; der Pfeil A gibt die Richtung zum Lenkrad und der Pfeil A' die Richtung zum Lenkgetriebe an. In einem Zwischenbereich bildet die Lenksäule einen Torsionsstab 10a, und zwar durch eine Materialverdünnung gegebener Stärke, so daß sich im Bereich des Lenksäulen-Torsionsstabs 10a ein geringerer Durchmesser D' der Lenksäule ergibt, verglichen mit dem normalen Lenksäulendurchmesser D.

Am Anfang des Torsionsstabs, also bei 11 ist eine Hülse 12 befestigt, vorzugsweise angeschweißt, die sich bis nahe zu einem Lagerflansch 13 erstreckt, der verdrehfest mit der weiterführenden Lenksäule verbunden und auf dieser gelagert ist.

Am Ende der Hülse 12 ist ein Mitnehmer 14 um einen vorgegebenen Winkel auf der Lenksäule drehbar gelagert und an der Hülse 12 befestigt, beispielsweise ebenfalls durch eine bei 15 gezeigte Schweißverbindung.

Der Mitnehmer 14 kann die Form eines an der Denksäule befestigten Stabes oder eines die Lenksäule 10 umgebenden Ringes 14a aufweisen,von dem ein stegartiger, L-förmig abgebogener Ansatz 14b ausgeht. Dieser Ansatz 14b dringt durch eine Öffnung in den Lagerflansch 13 ein und durchsetzt diesen. Man erkennt, daß durch eine Momenteneinleitung von der Lenkradseite her der Mitnehmeransatz 14b daher eine geringfügige Relativverdrehung relativ zum Lagerflansch 13 ausführen kann, die in Richtung des Doppelpfeils B in Fig. 1 verläuft.

Der Lagerflansch 13 lagert an seinem Außenumfang drehbar zwei zueinander unabhängige, außen gezahnte Hohlräder Z3 und Z4. Dabei weist der Lagerflansch 13 an seinem Außenumfang Durchbrechungen 13a auf (Fig. 1), durch welche, axial zueinander versetzt, jeweils Kupplungsbacken 15a, 15b am Innendurchmesser der Hohlräder Z3 bzw. Z4 zur Anlage kommen können. Die Kupplungsbacken 15a, 15b sind jeweils bei 16a, 16b sinnvollerweise an den entgegengesetzten Wandbereichen des Lagerflansches 13 drehbar gelagert; sie verfügen über jeweils einen Kupplungsschuh 16 und eine nasenartige Verlängerung 16a. Mit dem Kupplungsschuh gelangen sie zur Anlage an den Innendurchmesser des jeweils zugeordneten Hohlrades Z3 bzw. Z4, während die nasenartige Verlängerung 16a dazu dient, mit dem Mitnehmer 14, genauer mit dessen abgebogenem Ansatz 14b in Wirkverbindung zu treten, so daß je nach der relativen Verdrehung des Mitnehmeransatzes 14b entweder der eine oder der andere Kupplungsschuh 16 der Kupplungsbacke 15a oder 15b an den Innendurchmesser des Hohlrades Z3 bzw. Z4 bei Momenteneinleitung durch den Fahrer am Lenkrad gedrückt wird, wobei die außen verzahnten Hohlräder Z3 bzw. Z4 in einer geeigneten Haltevorrichtung des Lagerflansches 13 von diesem drehbar gegeneinander angeordnet aufgenommen sind.

Die weiteren Erläuterungen gehen nunmehr am besten von der anderen Seite aus, wobei zunächst bei 17 ein mit der Ausgangswelle eines nicht dargestellten Elektromotors verbundenes Ritzel 17 dargestellt ist. Der Elektromotor kann bei Einsetzen der gewünschten Parkierhilfe in geeigneter, hier nicht im einzelnen zu erläuternder Weise angesteuert werden, wobei sich eine Drehrichtung der Ausgangswelle beispielsweise entsprechend dem Pfeil C ergibt. Diese Drehrichtung gilt für beide Lenkrad -Richtungseinschläge und braucht, wie eingangs schon erläutert, nicht geändert zu werden; das Ausgangsritzel 17 kämmt mit einem ersten Zahnrad Z1, welches seinerseits mit einem gleich großen Zahnrad Z2 kämmt. Die Zahnräder Z1 und Z2 sind in geeigneter Weise innerhalb eines entsprechenden stationären und das Lenkhilfeaggregat soweit sinnvoll auch vollständig einschließenden Gehäuses gelagert, wobei sie in Verlängerung der sie lagernden Wellen 18 über Freiläufe 19 geeigneten Aufbaus mit Zahnrädern Z1' und Z2' verbunden sind. In der kleinen Zeichnung rechts oben der Fig. 2 ist eine mögliche Ausführungsform eines solchen Freilaufs dargestellt; dieser kann in üblicher Weise aufgebaut sein und einen Klemmkörper 19' beispielsweise in Form einer Kugel aufweisen, die über eine Schräge bei Antrieb des jeweils größeren Zahnrades Z1, Z2 in die Klemmposition mitgenommen wird, wodurch dann die Drehmitnahme der konzentrisch auf der gleichen Welle axial versetzt zu den großen Zahnrädern Z1 und Z2 angeordneten kleinen Zahnräder Z1' und Z2' erfolgt, die dann ihrerseits wieder axial und im übrigen auch, wie die Fig. 1 zeigt, zueinander in einem vorgegebenen Winkel versetzt, mit der Außenverzahnung der Hohlzahnräder Z3 und Z4 kämmen.

Ist also der Servomotor angesteuert, dann drehen sich sämtliche erwähnten Zahnräder, angetrieben von dem Ritzel 17, also die Zahnräder Z1 und Z2, wobei das Zahnrad Z1 direkt vom Ritzel angetrieben ist und seinerseits das Schwesternzahnrad Z2 antreibt; über die Freiläufe, die bei Momenteneinleitung vom Servomotor sperren, sind dann die Zahnräder Z1' und Z2' angetrieben, die ihrerseits und daher auch gegenläufig die Hohlräder Z3 und Z4 antreiben. Diese Zahnräder können durch mit dem Lagerflansch 13 verschraubte Halteringe 19a, 19b oder auf geeignete andere Weise am Außenumfang des Lagerflansches 13 gehalten sein.

Es ergibt sich dann folgende Funktion. Sobald durch einen Lenkradeinschlag eine entsprechend Tordierung der Lenksäule 10 im Bereich des Torsionsstabs 10a erfolgt - bei gleichzeitig bewirkter Ansteuerung des nicht dargestellten Elektroservomotors -, wird über den Mitnehmeransatz 14b entsprechend der gewünschten Lenkraddrehrichtung die dann insofern zutreffende Kupplungsbacke 15a, 15b mit ihrem Kupplungsschuh 16 an den Innendurchmesser entweder des Zahnrads Z3 oder des Zahnrads Z4 angelegt, so daß sich zusätzlich zum eingeleiteten Lenkmoment ein entsprechendes, auf den Reibungseingriff zurückzuführendes zusätzliches Servo-Hilfsmoment als Lenkhilfe ergibt, welches noch dadurch verstärkt wird, daß durch die Reaktionskraft beim Anlegen der jeweiligen Kupplungsbacke 15a, 15b auch das entsprechende Hohlzahnrad Z3 bzw. Z4 an den Lagerflansch 13, nämlich an dessen äußere Peripherie, gedrückt wird.

Dabei kann es eine vorteilhafte Ausgestaltung vorliegender Erfindung sein, die jeweiligen Kupplungsbacken 15a, 15b so zu gestalten, daß sie eine Form haben, wie in Fig. 1 dargestellt, so daß sich eine Hebelarmwirkung um den jeweiligen Drehpunkt 16a, 16b der Kupplungsbacke 15a, 15b ergibt, die aufgrund des durch den Mitnehmeransatz 14b hervorgerufenen Reibmoments zu einer Selbstverstärkung der Anlage führt, wie aus Fig. 1 ohne weiteres erkennbar, ähnlich der Bremsbackenselbstverstärkung bei Backenbremsen, da auf den Kupplungsschuh 16 durch die Reibverbindung mit der Innenfläche des jeweiligen Hohlzahnrads Z3 bzw. Z4 eine Mitnahmekraft in tangentialer Richtung ausgeübt wird, die sich zerlegen läßt in eine unmittelbar auf den Drehpunkt 16a auswirkende Kraft und eine Kraft, die danach trachtet, den Kupplungsschuh noch stärker an die Innenwandung des jeweiligen Hohlzahnrades anzupressen.

Zur Rückstellung der jeweiligen Kupplungsbacke 15a, 15b bzw. um zu verhindern, daß die durch den Mitnehmeransatz 14b nicht beaufschlagte Kupplungsbacke ebenfalls in eine Reibposition zu ihrem zugeordneten Hohlzahnrad Z3, Z4 gerät, kann jede Kupplungsbacke eine Vorspannungsblattfeder 20 aufweisen, die sich an einem geeigneten inneren Vorsprung 21 des Lagerflansches 13 abstützt und den Kupplungsschuh 16 vom Hohlzahnrad abdrückt.

Es ist empfehlenswert, für eine zufriedenstellende Funktion eine möglichst weitgehende Spielfreiheit der beweglichen Teile anzustreben; so kann es empfehlenswert sein, die Mitnehmerwirkung auf die Kupplungsbacken 15a, 15b mittels eines in der Zeichnung nicht dargestellten Exzenterbolzens einstellbar auszuführen, wodurch es gelingt, die Lose im System bis auf ein notwendiges Mindestmaß zu reduzieren. In diesem Fall ist dann lediglich das Verhalten des Torsionsstabs 10a für die Übertragung des Lenkmoments wirksam.

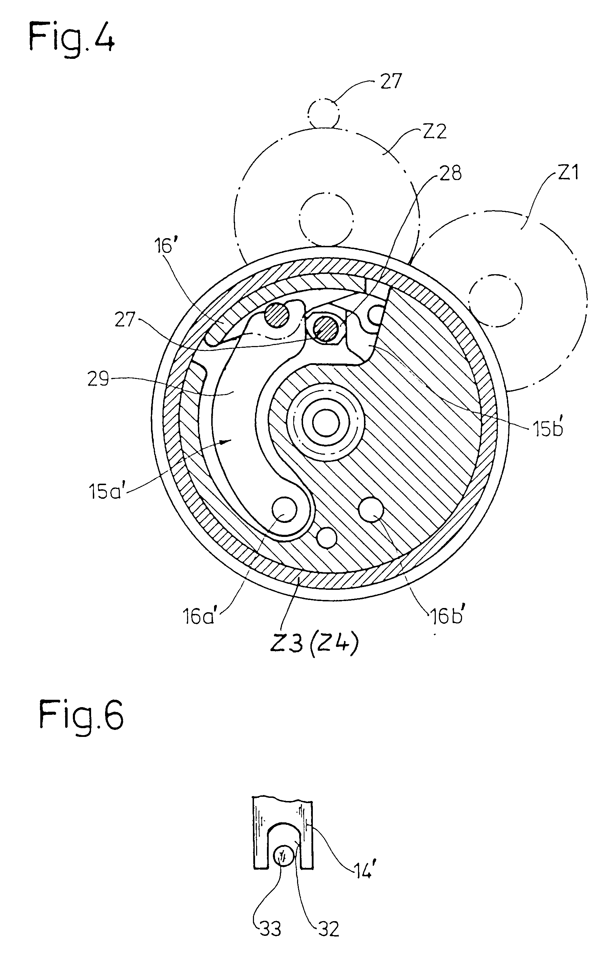

Eine weitere Ausgestaltung vorliegender Erfindung ist bei Auftreten einer Extremsituation empfehlenswert, die darin bestehen kann, daß es infolge eines zu großen eingeleiteten Lenkmoments zu einer vollständigen oder teilweisen Motorblockierung des Servomotors kommt. Eine solche Situation könnte dann auftreten, wenn die Lenkung sich auf Anschlag befindet und der Fahrer dennoch weiter drückt bzw. ein Rad gegen einen Bordstein gedrückt wird. Hier könnte beispielsweise eine bei Überschreiten eines vorgegebenen Drehmoments wirksame Rutschkupplung am Servomotor vorgesehen werden oder man begrenzt die mögliche Tordierung des Torsionsstabs dadurch, daß am Mitnehmer 14, wie in Fig. 3 gezeigt, eine Aussparung 14c vorgesehen ist, innerhalb welcher ein fest mit der Lenksäule 10 verbundener Bolzen 10' angeordnet ist. Der vorgegebene Abstand der Bolzenabmessungen zu der Aussparung 14c, in der er sitzt, gibt die Begrenzung der Relativverdrehung zwischen dem Lenksäulenbereich vor dem Torsionsstab 10a und hinter dem Torsionsstab vor. Entsprechend der Elastizität der Servoeinrichtung (Mitnehmer 14, Kupplungsbacke 15a,15b usw.) ergibt sich dann bei der Momenteneinleitung durch den Fahrer eine begrenzte Verdrehung der Lenksäule 10, begrenzt durch die Anlage des Bolzens 10' an der jeweiligen Seite der Aussparung 14c. Ab dem Zeitpunkt der Anlage erfolgt dann die weitere Momentenübertragung direkt über die Lenksäule.

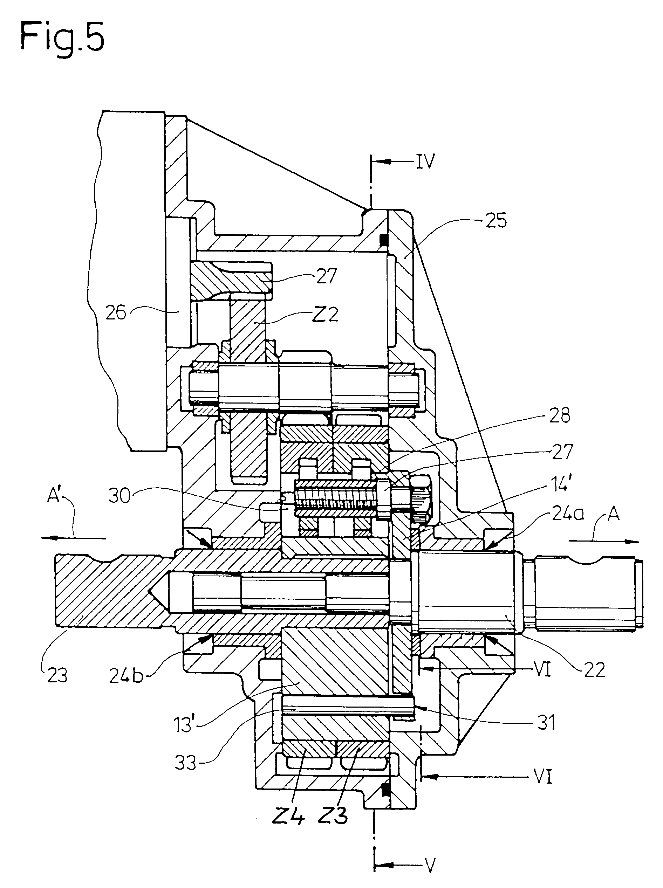

Ist dagegen bei bestimmten Betriebszuständen der Servomotor nicht angesteuert, beispielsweise bei höheren Geschwindigkeiten, weil die erfindungsgemäße elektromotorische Lenkhilfe nur für den Parkierbetrieb eingesetzt wird, dann löst der Freilauf 19 automatisch,und bei einer Betätigung der Lenksäule 10 drehen die Zahnräder Z3 bzw. Z4 und die mit ihnen kämmenden kleineren Zahnräder Z1', Z2' frei. Es versteht sich, daß die gesamte Einheit gekapselt untergebracht werden kann, wie dies im übrigen bei der im folgenden noch zu erläuternden Ausführungsform der Figuren 4 und 5 der Fall ist, wobei aie Gehäusekapselung auch mit einer Ölfüllung versehen werden kann, um so einen Verschleiß an kritischen Teilen (Kupplungsbelag, Mitnehmer) kleinzuhalten bzw. im wesentlichen vollständig zu vermeiden.

Das Ausführungsbeispiel der Figuren 4 und 5 entspricht im Grundsatz der in den Figuren 1 und 2 beschriebenen Ausführungsform, so daß gleiche bzw. jedenfalls gleichwirkende Teile mit einem gleichen Bezugszeichen, lediglich unterschieden durch einen Beistrich oben, gekennzeichnet sind, so daß es auch nicht erforderlich ist, wiederholt auf den schon erläuterten Grundaufbau und die Grundfunktion einzugehen.

Wesentlich ist bei dem Ausführungsbeispiel der Figuren 4 und 5, daß ein automatischer Spielausgleich vorgesehen ist, wobei auf den im axialen Verlauf der Lenksäule realisierten Torsionsstab vollkommen verzichtet ist. Es besteht daher allgemein ausgedrückt zwischen Antrieb und Abtrieb keine direkte Verbindung über den Torsionsstab, wobei die beiden hier aneinander grenzenden Wellen der Lenksäule, also der von der Lenkradseite kommende Lenksäulenteil 22 und der zum Lenkgetriebe führende Lenksäulenteil 23 lose ineinander gelagert sind.

Es ist ein die Einzelteile aufnehmendes, über geeignete Dichtungen 24a, 24b auch abdichtendes Gehäuse 25 vorgesehen, in welchem der hier noch teilweise dargestellte Elektroservomotor oder jedenfalls ein mit ihm verbundenes Getriebe 26 aufgenommen ist, der mit seiner Ausgangswelle 27 eines der Zahnräder, nämlich hier das Zahnrad Z2, antreibt. Dieses kämmt dann mit dem anderen Zahnrad Z1.

Der Mitnehmer 14' ist fest mit dem Eingangswellenteil 22 verbunden und lagert im Bereich der Kupplungsbackenbeaufschlagung einen Bolzen 27, der seinerseits drehbar eine Exzenterhülse 28 lagert. Die Form der Kupplungsbacken 15a', 15b' ist geringfügig unterschiedlich zu der Form wie in Fig. 1 gezeigt; der jeweilige Kupplungsschuh 16' ist schwenkbar bzw. drehbar am kreisbogenförmig verlaufenden Hebel 29 der Kupplungsbacke 15a' befestigt, beispielsweise eingeklipst. Die auf dem Bolzen 27 des Mitnehmers 14' angeordnete Exzenterhülse 28 ist über eine Torsionsfeder 30 vorgespannt und wird von dieser so lange verdreht, bis im System keine Lose mehr vorhanden ist. Dadurch liegen die Kupplungsbacken 15a', 15b' bei Betätigung der Lenkung bereits an den Innendurchmessern der zugeordneten vom Lagerflansch 13' getragenen Hohlzahnräder Z3, Z4 an, wodurch störende Spieleinwirkungen in der Lenkung von vornherein automatisch kompensiert sind. Dabei ergibt sich ferner der Vorteil, daß ein Verschleiß am Kupplungsbelag der Kupplungsschuhe 16' durch selbsttätiges Nachstellen automatisch kompensiert wird.

Es ist zweckmäßig, die Zentrierhülse 28 in ihrer äußeren Form mit einem solchen Exzenterprofil zu versehen, wie dieses in der Querschnittdarstellung der Fig. 4 deutlich gemacht ist, wodurch infolge Selbsthemmung ein Zurückdrehen der Exzenterhülse gegen aie Torsionsfeder 30 unter Last durch die Formgebung des Exzenterprofils verhindert wird. Die Vorspannkraft der Torsionsfeder 30 sollte so gewählt sein, daß aufgrund der Anpreßkraft bei laufendem Servomotor kein unzulässig hoher Verschleiß an den Kupplungsbelägen auftritt.

Da bei dem dargestellten Ausführungsbeispiel der Figuren 4 und 5 kein direkter Durchgriff der Lenksäule bis zum Lenkgetriebe vorhanden ist,ist es zur Sicherheit ferner empfehlenswert, eine letzten Endes formschlüssig eingreifende Mitnehmeranordnung 31 noch vorzusehen, die am unteren Ende des Mitnehmers 14' vorgesehen ist. Hierzu ist der Mitnehmer 14', wie in Fig. 6 gezeigt, gabelförmig geschlitzt mit einer U-förmigen Ausnehmung 32 versehen, in welche ein fest mit dem Lagerflansch 13' verbundener Stift 33 eingreift. Über diesen Stift ist die formschlüssige Mitnahme der zum Lenkgetriebe führenden Lenksäulen-Teilwelle 23 auf jeden Fall möglich.

## Patentansprüche

1. Elektromotorische Servolenkung (Lenkhilfe) für Kraftfahrzeuge und dgl., insbesondere für den Parkiergeschwindigkeitsbereich (Park-Servo), mit einem Untersetzungsgetriebe (17, Z1, Z1', Z2, Z2', Z3, Z4; 27, Z1, Z2, Z3, Z4) zwischen einem Servomotor und der Lenksäule (10), bzw. dem zur mechanischen Radverstellung weiterführenden Abtrieb, mit zwei kontinuierlich gegenläufig drehenden, von dem Servomotor angetriebenen Hohlzahnrädern (Z3, Z4) und mit zwei Kupplungsbacken (15a, 15b; 15a', 15b'), die eine Antriebsverbindung vom Servomotor zur Lenkgetriebeseite der Lenksäule (10; 23) durch reibschlüssigen Angriff an den Hohlzahnrädern (Z3, Z4) dann herstellen, wenn bei manueller Momenteneinleitung am Lenkrad, die eine Relativverdrehung zwischen der Lenkradseite (22) und der Lenkgetriebeseite (23) der Lenksäule (10) bewirkt, ein mit der Lenkradseite (22) der Lenksäule (10) verbundener Mitnehmer (14; 14') in Abhängigkeit von der Einwirkungsrichtung den erforderlichen Kupplungsanpreßdruck durch mechanische Einwirkung auf eine Kupplungsbacke (15a, 15b; 15a', 15b') erzeugt, dadurch gekennzeichnet, daß ein auf der Abtriebsseite (23) der Lenksäule (10) drehfest gelagerter Lagerflansch (13; 13'), der umfangsseitig die Hohlzahnräder (Z3, Z4) drehbar trägt, in seiner äußeren Ringwandung Durchbrechungen (13a) aufweist, durch welche die mit dem Lagerflansch (13; 13') verbundenen Kupplungsbacken (15a, 15b; 15a', 15b') mit Kupplungsschuhen (16; 16') zur Herbeiführung des Reibschlusses an dem Innenumfang der Hohlzahnräder (Z3, Z4) greifen.

2. Elektromotorische Servolenkung nach Anspruch 1, dadurch gekennzeichnet, daß die Lenksäule (10) über einen Teilbereich ihrer Längserstreckung einen Torsionsstab (10a) bildet bei im übrigen direktem Durchgriff auf die Abtriebsseite und daß der lenkradseitige Anfang des Torsionsstabes (10a) über eine starre Hülse (12) den bis zum Lagerflansch (13) geführten Mitnehmer (14) lagert, der mit einem Mitnehmeransatz (14b) innerhalb des Lagerflansches je nach Richtung der Momenteneinleitung durch den Fahrer eine der beiden Kupplungsbacken (15a, 15b) beaufschlagt, die bei mit der Momenteneinleitung gleichzeitig erfolgter Ansteuerung des Servomotors jeweils mit einem der kontinuierlich gegenläufig drehenden und zueinander axial versetzt angeordneten Hohlzahnrädern (Z3, Z4) in Wirkverbindung treten.

3. Elektromotorische Servolenkung nach Anspruch 1 oder 2, dadurch gekennzeichnet, daß der Mitnehmer (14) durch eine Exzenterhülse (28) einstellbar ausgeführt ist zur Beseitigung von Lose der beweglichen Teile.

4. Elektromotorische Servolenkung nach Anspruch 1, dadurch gekennzeichnet, daß unter Verzicht auf eine Torsionsstabbildung die Lenksäule zwei zueinander relativ verdrehbare und ineinandergreifende Wellenteilbereiche (22, 23) umfaßt, wobei am lenkradseitigen Lenksäulenteil (22) der Mitnehmer (14') drehfest befestigt ist und drehbar eine Exzenterhülse (28) lagert, die mit den jeweils zugewandten Angriffsflächen der beiden Kupplungsbacken (15a', 15b') je nach Richtung der Momenteneinleitung in Wirkverbindung tritt, und daß die drehbare Exzenterhülse (28) durch eine Torsionsfeder (30) so vorgespannt ist, daß sich Spielfreiheit im System ergibt.

5. Elektromotorische Servolenkung nach Anspruch 4, dadurch gekennzeichnet, daß der Mitnehmer (14') einen Lagerbolzen (27) lagert, auf dem die Exzenterhülse (28) drehbar angeordnet ist, und daß die Exzenterhülse (28) über eine solche Formgebung ihres Exzenterprofils verfügt, daß Selbsthemmung eintritt und ein Zurückdrehen der Exzenterhülse (28) gegen die Wirkung der Torsionsfeder (30) unter Last vermieden ist.

6. Elektromotorische Servolenkung nach Anspruch 5, dadurch gekennzeichnet, daß die Vorspannungskraft der Torsionsfeder (30) so bemessen ist, daß ein Verschleiß an den Kupplungsbelägen aufgrund der von ihr ausgeübten Anpreßkraft über die Exzenterhülse (28) vermieden ist.

7. Elektromotorische Servolenkung nach einem der Ansprüche 1 bis 4, dadurch gekennzeichnet, daß zur formschlüssigen Verbindung des Antriebs-Lenksäulenteils (22) mit dem Abtriebs-Lenksäulenteil (23) der Mitnehmer (14') eine U-förmige Ausnehmung (22) aufweist, die einen fest mit dem Abtriebs-Lenksäulenteil (23) verbundenen Stift (33) mit vorgegebenem Freigang aufnimmt.

8. Elektromotorische Servolenkung nach einem der Ansprüche 1 bis 4, dadurch gekennzeichnet, daß zur Begrenzung der Torsionsstab-Tordierung eine am Mitnehmer (14) vorgesehene Aussparung (14c) einen fest mit der Lenksäule (10) verbundenen Bolzen (21) mit Abstand aufnimmt.

9. Elektromotorische Servolenkung nach einem der Ansprüche 1 bis 8, dadurch gekennzeichnet, daß ein die Komponenten der Servolenkung gekapselt und abdichtend umgebendes, eine Ölfüllung enthaltendes Gehäuse (25) vorgesehen ist.

## Claims

1. Electric motor servo-steering system (steering aid) for motor vehicles and the like, in particular for the parking speed range (parking servo device), having a downstep gear (17, Z1, Z1', Z2, Z2', Z3, Z4; 27, Z1, Z2, Z3, Z4) between a servo motor and the steering column (10), and the power output which carries on to mechanically move the wheels, having two hollow cogs (Z3, Z4) which rotate continuously in opposite directions and are driven by the servo motor and having two coupling jaws, (15a, 15b; 15a', 15b') which bring about a drive connection between the servo motor to the steering gear side of the steering column (10; 23) by frictional engagement on the hollow cogs (Z3, Z4) whenever, in the case of manual application of torque to the steering wheel which brings about a relative rotation between the steering wheel side (22) and the steering gear side (23) of the steering column (10), a driver (14; 14') which is connected to the steering wheel side (22) of the steering column (10) produces as a function of the direction of application the required coupling pressure by mechanically acting on one coupling jaw (15a, 15b; 15a', 15b'), characterized in that a bearing flange (13; 13') which is mounted fixed in terms of rotation on the power output side (23) of the steering column (10) and rotatively bears the cogs (Z3, Z4) on the circumferential side has in its outer annular wall openings (13a) through which the coupling jaws (15a, 15b; 15a', 15b') which are connected to the bearing flange (13; 13') engage with coupling shoes (16; 16') on the internal circumference of the cogs (Z3, Z4) in order to bring about the frictional engagement.

2. Electric motor servo-steering system according to Claim 1, characterized in that the steering column (10) forms over a sub-area of its longitudinal extent a torsion rod (10a) with otherwise direct through-engagement onto the power output side, and in that the steering wheel-side beginning of the torsion rod (10a) bears by means of a rigid sleeve (12) the driver (14) which is guided as far as the bearing flange (13) and acts with one driver shoulder (14b) within the bearing flange on one of the two coupling jaws (15a, 15b) depending on the direction of the application of torque by the driver, the said coupling jaws (15a, 15b) forming an operative connection in each case with one of the cogs (Z3, Z4) which continuously rotate in opposite directions and are arranged axially offset with respect to one another when the servo motor is actuated at the same time as the application of torque.

3. Electric motor servo-steering system according to Claim 1 or 2, characterized in that the driver (14) is designed so as to be adjustable by means of an eccentric sleeve (28) in order to eliminate play of the movable parts.

4. Electric motor servo-steering system according to Claim 1, characterized in that, whilst dispensing with the formation of the torsion rod, the steering column comprises two shaft sub-areas (22, 23) which can be rotated in relation to one another and engage one in the other, the driver (14') being attached fixed in terms of rotation to the steering wheel-side steering column component (22) and rotatively bearing an eccentric sleeve (28) which forms an operative connection with the respectively facing engagement faces of the two coupling jaws (15a', 15b') depending on the direction of the application of torque, and in that the rotatable eccentric sleeve (28) is prestressed by a torsion spring (30) in such a way that the system is made free of play.

5. Electric motor servo-steering system according to Claim 4, characterized in that the driver (14') bears a bearing bolt (27) on which the eccentric sleeve (28) is rotatably arranged, and in that the eccentric profile of the eccentric sleeve (28) is shaped in such a way that self-blocking occurs and turning back of the eccentric sleeve (28) counter to the effect of the torsion spring (30) under load is avoided.

6. Electric motor servo-steering system according to Claim 5, characterized in that the prestressing force of the torsion spring (30) is dimensioned such that wear on the coupling linings resulting from the contact force exerted by the said spring via the eccentric sleeve (28) is avoided.

7. Electric motor servo-steering system according to one of Claims 1 to 4, characterized in that, for the positively engaging connection of the drive steering column component (22) to the power output steering column component (23), the driver (14') has a U-shaped recess (22) which receives a pin (33) which is permanently connected to the power output steering column component (23) and has a predetermined degree of play.

8. Electric motor servo-steering system according to one of Claims 1 to 4, characterized in that, in order to limit the twisting of the torsion rod a recess (14c) which is provided on the driver (14) receives, with spacing, a bolt (21) which is permanently connected to the steering column (10).

9. Electric motor servo-steering system according to one of Claims 1 to 8, characterized in that a housing (25) which surrounds the components of the servo-steering system in an encapsulated and sealing fashion and contains oil is provided.

## Revendications

1. Direction assistée à moteur électrique, pour des véhicules automobiles ou analogues, notamment pour la plage des vitesses correspondant aux manoeuvres de garage (asservissement de manoeuvres de garage) avec un réducteur (17, Z1, Z1', Z2, Z2', Z3, Z4 ; 27, Z1, Z2, Z3, Z4) entre le moteur d'assistance et la colonne de direction (10) ou entre la sortie de transmission allant vers la commande mécanique des roues, avec deux pignons dentés creux (Z3, Z4) entraînés par le moteur d'assistance et tournant en sens opposés, en continu, ainsi que deux mâchoires d'accouplement (15a, 15b ; 15a', 15b') établissant une liaison de transmission entre le moteur d'asservissement et le côté d'entraînement de la direction, de la colonne de direction (10 ; 23) par une prise réalisée par une liaison par frottement au niveau des roues dentées creuses (Z3, Z4), lorsqu'un couple induit manuellement dans le volant provoque une rotation relative entre le côté du volant (22) et le côté transmission de direction (23) de la colonne de direction (10), un organe d'entraînement (14 ; 14') relié au côté volant (22) de la colonne de direction (10) en fonction de la direction d'action de la pression nécessaire à l'embrayage par action mécanique sur une mâchoire d'embrayage (15a, 15b ; 15a', 15b'), caractérisée en ce qu'une bride de palier (13, 13') montée solidairement en rotation sur le côté de sortie de transmission (23) de la colonne de direction (10),et munie à sa périphérie, des roues dentées creuses (Z3, Z4) libres en rotation, comportant les passages (13a) dans sa paroi extérieure annulaire, à travers lesquels les mâchoires d'embrayage (15a, 15b ; 15a', 15b') reliées à la bride de palier (13, 13'), viennent prendre par les patins d'embrayage (16, 16') pour établir la liaison par frottement avec la périphérie intérieure des roues dentées creuses (Z3, Z4).

2. Direction assistée par moteur électrique selon la revendication 1, caractérisée en ce que la colonne de direction (10) est formée sur une partie de sa longueur par une barre de torsion (10a) pour du reste une prise directe avec le côté de sortie de transmission et en ce que le début de la barre de torsion (10a) du côté du volant loge par une douille rigide (12) l'organe d'entraînement (14) guidé jusqu'à la bride de palier (13), cet organe d'entraînement sollicitant par un prolongement d'entraînement (14b), à l'intérieur de la bride de palier, suivant la direction, la transmission du couple par le conducteur, l'une des deux mâchoires d'embrayage (15a, 15b) qui coopère avec la commande du servomoteur simultanée à l'induction du couple, avec chaque fois l'une des roues dentées creuses (Z3, Z4) tournant en continu en sens opposé et de manière décalée axialement.

3. Direction assistée à moteur électrique selon la revendication 1 ou 2, caractérisée en ce que l'organe d'entraînement (14) est guidé de manière réglable par une douille à excentrique (28) pour éliminer le jeu des parties mobiles libres.

4. Direction assistée à moteur électrique selon la revendication 1, caractérisée en ce qu'en renonçant à une réalisation par une barre de torsion, la colonne de direction comporte deux zones de parties d'arbre (22, 23) en prise, et qui peuvent tourner l'une par rapport à l'autre, la partie de colonne (22) du côté du volant portant solidairement l'organe d'entraînement (14') et recevant à rotation une douille à excentrique (28) qui coopère suivant le sens du couple induit, chaque fois avec les surfaces d'attaque correspondantes des deux mâchoires d'embrayage (15a', 15b'), et la douille à excentrique (28) rotative est précontrainte par un ressort de torsion (30) pour supprimer le jeu dans le système.

5. Direction assistée à moteur électrique selon la revendication 4, caractérisée en ce que l'organe d'entraînement (14') reçoit un goujon de palier (27) sur lequel la douille à excentrique (28) est montée à rotation, et cette douille (28) a un profil excentrique dont la forme est telle qu'elle crée un autoblocage et interdit à la douille à excentrique (28) de tourner en arrière, contre l'action du ressort de traction (30), en charge.

6. Direction assistée à moteur électrique selon la revendication 5, caractérisée en ce que la précontrainte du ressort de torsion (30) est dimensionnée pour éviter l'usure des garnitures d'embrayage du fait de leur force d'application exercée sur la douille à excentrique (28).

7. Direction assistée à moteur électrique selon l'une des revendications 1 à 4, caractérisée en ce que, pour une liaison par la forme de la partie de colonne (22) du côté de la transmission et de la partie de colonne de direction (23) du côté de la sortie de transmission, l'organe d'entraînement (14') présente une cavité (22) en forme de U qui reçoit une tige (33) solidaire de la partie de colonne de direction de sortie (23) avec une marche à vide prédéterminée.

8. Direction assistée à moteur électrique selon l'une des revendications 1 à 4, caractérisée en ce que, pour limiter la torsion de la barre de torsion, une cavité (14c) prévue sur l'organe d'entraînement (14) reçoit à distance un goujon (21) solidaire de la colonne de direction (10).

9. Direction assistée à moteur électrique selon l'une des revendications 1 à 8, caractérisée en ce qu'elle comporte un boîtier (25) rempli d'huile et logeant les composants de la direction assistée de manière encapsulée et étanche.
